(19) Europäisches Patentamt
European Patent Office
Office européen des brevets

(11) **EP 0 705 720 B1**

(12) **EUROPEAN PATENT SPECIFICATION**

(45) Date of publication and mention
of the grant of the patent:
**02.06.1999 Bulletin 1999/22**

(51) Int. Cl.⁶: **B60C 11/00**, B60C 11/04

(21) Application number: **95203019.5**

(22) Date of filing: **12.11.1993**

(54) **Radial tyre**

Radialer Luftreifen

Bandage pneumatique radial

(84) Designated Contracting States:
**DE FR GB**

(30) Priority: **13.11.1992 JP 328928/92**

(43) Date of publication of application:
**10.04.1996 Bulletin 1996/15**

(62) Document number(s) of the earlier application(s) in
accordance with Art. 76 EPC:
**93309071.4 / 0 598 567**

(73) Proprietor:
**SUMITOMO RUBBER INDUSTRIES LIMITED
Kobe-shi, Hyogo-ken (JP)**

(72) Inventors:
• **Yabu, Masanori
Kishiwada-shi, Osaka-fu (JP)**
• **Kojima, Yoshihide
Takarazuka-shi, Hyogo-ken (JP)**

(74) Representative:
**Stewart, Charles Geoffrey
Dunlop Tyres Ltd
Fort Dunlop, Erdington, Birmingham B24 9QT
(GB)**

(56) References cited:
**EP-A- 0 175 829          DE-A- 3 609 248
FR-A- 2 484 924          FR-A- 2 634 424
US-A- 5 012 847**

• **DATABASE WPI Week 9237 Derwent
Publications Ltd., London, GB; AN 92-303768
XP002024228 & JP-A-04 208 607 (SUMITOMO
RUBBER IND. LTD.) , 30 July 1992**

Remarks:
The file contains technical information submitted
after the application was filed and not included in
this specification

## Description

The present invention relates to a radial tyre for passenger cars that is reduced in weight and capable of reducing tyre noises.

Recently, weight reduction of a tyre for passenger cars has been required for energy saving. As well as methods for reducing the tyre's weight such as reduction in size and thickness of the tyre, the tyre's weight can also be effectively reduced by employing cords of aromatic polyamide fibres as an alternative to steel for the belt cords.

When using aromatic polyamide fibres as the belt cord, however, there is a problem in that the noise level during driving is increased in comparison with steel cord.

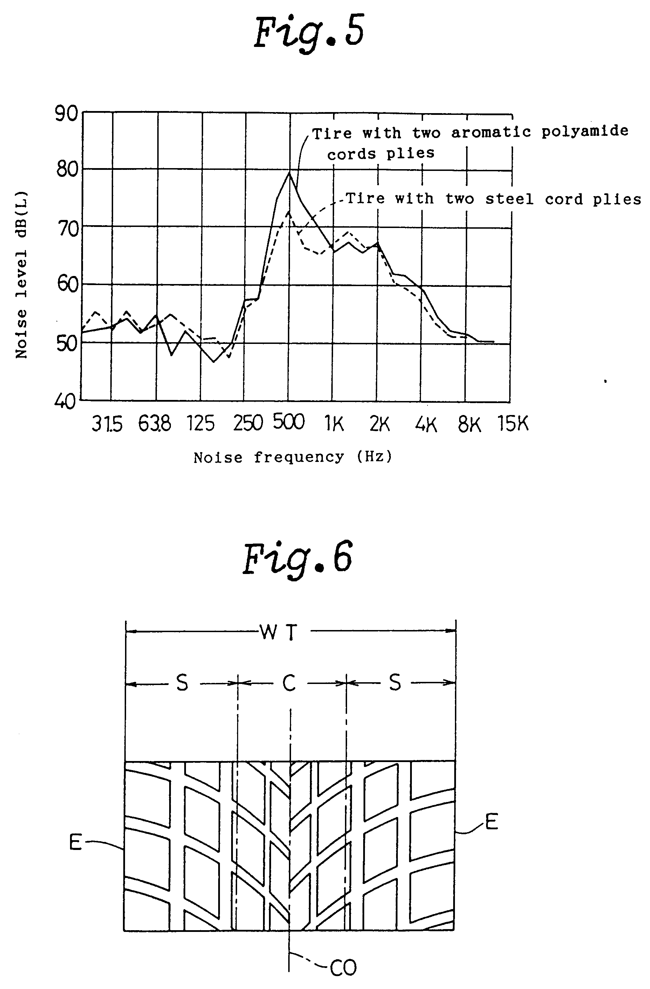

The inventors studied the causes of the noise, and found that the noise level was increased, in a tyre with a belt layer of aromatic polyamide fibres cords, at about 500 Hz, as shown in Fig. 5. In addition, a primary resonance mode was found at about 500 Hz by measuring the oscillation transfer characteristic in a sectional surface in the direction of the tyre's meridian. The inventors recognised that a belt layer of aromatic polyamide fibres cords is higher in oscillation transfer characteristic than a belt of steel cords, that is, it is more easily oscillated. This is thought to be because aromatic polyamide fibre is equivalent to a steel cord in terms of a strength against tension, but it is inferior to the latter in respect to compression strength. In Fig. 5, results of frequency analysis are shown, respectively, for a tyre with two steel cord plies by a broken line and a tyre with two aromatic polyamide fibre cord plies by a solid line.

Also as a result of these and other studies on the configuration of a tread in meridian section, the inventors discovered that the oscillational acceleration in the central area of a tread was remarkably varied depending on the position of a circumferential tread groove.

A tyre having a tread according to the preamble of claim 1 is known, for example, from EP-A-0 175 829. A lightweight radial tyre with reduced noise having a belt layer made of plies of aromatic polyamide fibre cords is known, for example, from JP-A-4 208 607.

It is a primary object of the invention to provide a radial tyre for passenger cars that is reduced in weight and yet capable of reducing noise.

According to one aspect of the present invention, a tyre for passenger cars comprises a radial carcass extending from a tread through side-walls and folded at each edge around a bead core of a bead, and a belt layer disposed radially outside said carcass, and said tread having a plurality of circumferential grooves extending on a tread surface in the circumferential direction of tyre, wherein when the ground-contact surface of the tread surface is virtually divided into three aliquots in the tyre axial direction so as to form a central area C and side areas S, S one on either side thereof, a ratio $\Sigma Ws/\Sigma Wc$ between a sum total $\Sigma Ws$ of the width Ws in the tyre axial direction of the circumferential grooves provided in the side area S and a sum total $\Sigma Wc$ of the width Wc in the tyre axial direction of the circumferential grooves provided in the centre area C is set at 0.8 to 2.0, the central area (C) being provided with two central circumferential grooves disposed symmetrically to the tyre's equator (CO), each of the side areas (S) being provided with a side circumferential groove disposed symmetrically to the tyre's equator (CO), the tread rubber defined between the tread surface and the belt layer is virtually divided to a pair of outer rib portions between a radial line Y1 from an edge of the ground-contact surface and a radial line Y2 from a centre of groove bottom of the side circumferential groove, a pair of inner rib portions between the radial line Y2 and a radial line Y3 from a centre of groove bottom of the central circumferential groove, and a central rib portion between the radial lines Y3, the ratio Mb/Ma between the mass Mb of rubber of the inner rib portion and the mass Ma being set at 1.0 to 1.5, characterised in that the tyre is a radial tyre having an aspect ratio of 0.4 to 0.6, said belt layer having two belt plies overlapping each other and one of said belt plies comprising belt cords of aromatic polyamide fibres, another belt ply comprising belt cords of aromatic polyamide fibres or steel fibres, and the ratio Mc/Ma between the mass Mc of rubber of the central rib portion and the mass Ma of rubber of the outer rib portion is set at 0.8 to 1.5.

An embodiment of the present invention will now be described, by way of example, referring to the attached diagrammatic drawings, in which;

Fig. 1 is a sectional view showing an embodiment of the invention;
Fig. 2 is a plan view illustrating the tread pattern of the tyre of Fig. 1;
Fig. 3 is a diagram showing a relation between the groove width ratio and acceleration level;
Fig. 4 is a diagram showing the noise frequency analysis for a tyre of the invention and a comparison tyre;
Fig. 5 is a diagram showing a noise frequency analysis for belt layers with a steel cord ply and aromatic polyamide fibre cord ply respectively;
Fig. 6 is a plan view showing the tread pattern of the conventional tyre in a Table 1;
Fig. 7 is a schematic illustration explaining the total groove width when the groove extends on a trisector line J;

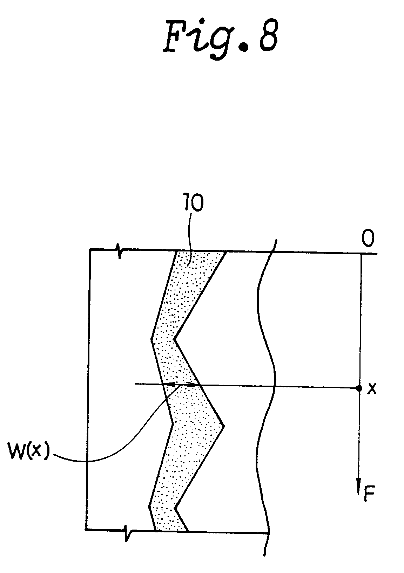

Fig. 8 is a schematic illustration explaining the total groove width when the groove width varies;

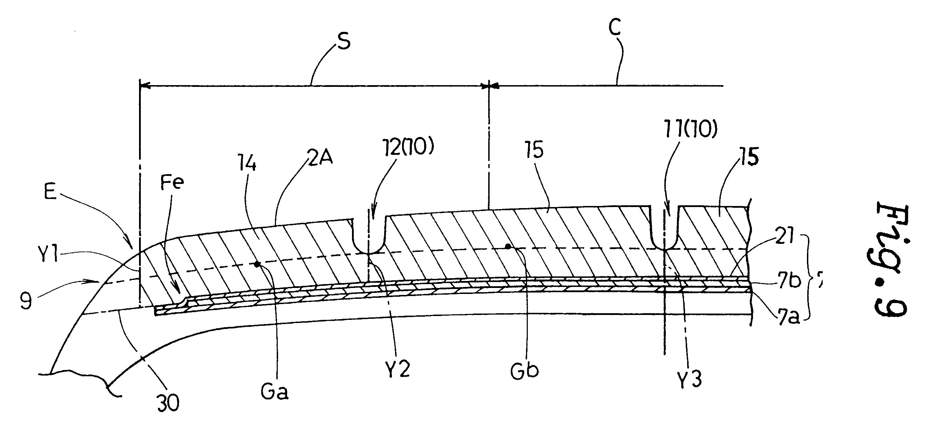

Fig. 9 is a partially sectional view explaining the tread rubber.

The embodiment comprises a low aspect radial tyre for passenger cars comprising a pair of beads 4 each having a bead core 5, side-walls 3 extending from the beads 4 outwardly in the radial direction of tyre, and a tread 2 linking between their outer ends. The aspect ratio of the tyre section height to the tyre width is 0.4 to 0.6. Between the beads 4, a radial carcass 6 extends under both edges the tread 2 through the side-walls 3 and its edges are folded back from inside to outside around the bead core 5. A belt layer 7 is provided on the carcass 6 and radially inwards of the tread 2. In addition, in each bead, a bead apex rubber 8 extending radially outwards from the bead core 5 is provided between the main part of the carcass 6 and the folded back part thereof.

The carcass 6 comprises two plies of carcass cords inclined at an angle of 70 to 90 degrees to the tyre's equator CO. Such organic fibre cords as nylon, polyester or aromatic polyamide may be used as the carcass cords.

The belt layer 7 comprises two belt plies of both edges of which are cut. A first belt ply 7a and a second belt ply 7b are arranged in order from the carcass 6 towards the tread surface 2A. The second belt ply 7b is formed to have a width slightly less than that of the first belt ply 7a, and the width of the overlapping part of the two belt plies 7a, 7b are thereby coincident with the width of the second belt ply 7b. The maximum width WB of the belt plies is set at 0.8 to 1.1 times the width WT of the ground-contacting surface of the tread 2.

Here, the ground-contacting surface is defined as the tread surface area which comes into contact with the ground in the state, mounted on a regular rim, inflated to 70% of regular internal pressure and with 88% of the normal load, where the regular rim is the rim officially approved for the tyre by for example JATMA (Japan), TRA (USA), ETRTO (Europe) or the like; the regular internal pressure is the maximum air pressure for the tyre officially specified in Air-pressure/Max.-loads Table by for example JATMA (Japan), TRA (USA), ETRTO (Europe) or the like; and the normal load is the maximum load for the tyre officially specified in Air-pressure/Max.-loads Table by for example JATMA (Japan), TRA (USA), ETRTO (Europe) or the like.

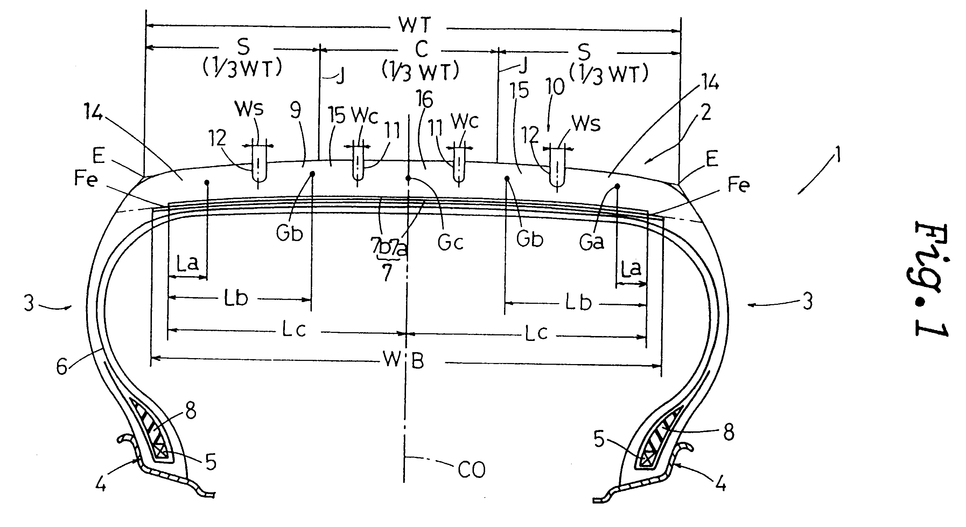

The first and second belt plies 7a, 7b are composed of belt cords aligned at an inclination angle of 5 to 30 degrees to the tyre's equator so that the cords of one ply are crossed to the cords of the other belt ply. For the belt cords of the belt ply 7a, 7b, the belt cords of one belt ply are aromatic polyamide fibres cords, and the belt cords of the other belt ply are aromatic polyamide fibres cords or steel fibres cords. In the embodiment of Figure 1 the first belt ply 7a is composed of steel fibres cords and the second belt ply 7b of aromatic polyamide fibres cords, moreover, the belt cords of the belt plies 7a, 7b have a tensile elastic modulus of 600 kg/mm$^2$ or more, a cord size of 750 d/2 to 3000 d/2 and a cord density in the plies of 80 to 150 per 10 cm.

The belt layer 7 may include a band ply disposed on the second belt ply 7b so as to cover the belt plies. The band ply is to prevent the belt from being lifted by centrifugal force in high-speed driving, and may be formed by a cut-end ply of organic fibre cords aligned at an angle of 0 to 5 degrees to the tyre's equator CO. The thickness of the band cord may be less than the above mentioned thickness of the belt cord, and, aromatic polyamide fibres cords having a thickness of 20 to 50% of the belt cord may be employed as band cords. The band ply may be formed by an endless ply wherein a narrow ply strip of organic fibre cords covered with topping rubber is wound spirally.

The tread surface 2A of the tread 2 is provided with a plurality of circumferential grooves 10 (11,12) extending in the circumferential direction and a plurality of lateral grooves 10A extending in the transverse direction crossing the circumferential grooves 10 (11,12) so that a block or rib pattern is formed.

On the other hand, the ground-contact surface is virtually divided by trisector lines J, J into three aliquots, a central area C and a pair of side areas S located one on either side thereof. The ratio of the total groove width ΣWs of the circumferential grooves in the side area S to the total groove width ΣWc of the circumferential grooves in the centre area C is set at 0.8 to 2.0. The circumferential grooves 10 may be straight grooves parallel with the tyre's equator CO or zigzag grooves.

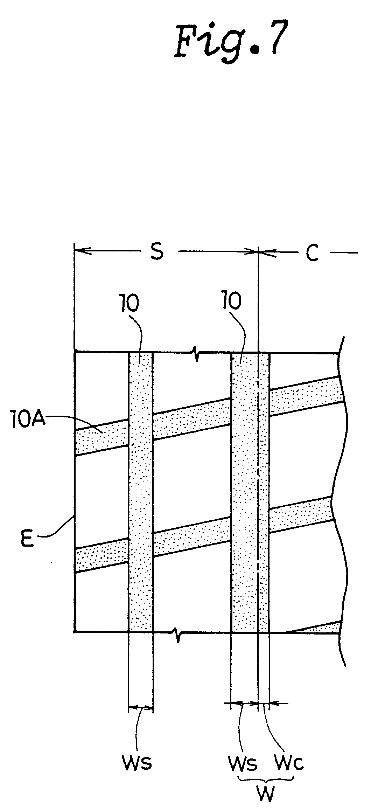

Here, the width Ws, Wc of the circumferential groove 10 (11,12) are measured on the tread surface 2A in the axial direction of the tyre. The total groove width ΣWs is the sum total of the widths Ws of the circumferential grooves 12 provided in the side area S, and the total groove width ΣWc is the sum total of the width Wc of the circumferential grooves 11 provided in the centre area C. If a circumferential groove 10 (11,12) lies on the trisector lines J, as a shown in Fig. 7, the width W of the circumferential groove 10 (11,12) is divided by the trisector lines J into a width element Ws in the side area S and a width element Wc in the centre area C, and the width elements Ws, Wc are distributed to the total width ΣWs and ΣWc, respectively. Also, if the width or the width element of the circumferential groove 10 (11,12) varies at each position x of the tyre circumferential direction F, as shown in Fig 7, the average width of the circumferential groove 10 (11,12) along all the groove length is employed. This average width is given by the following numerical expression;

$$\frac{\int_{o}^{x} W(x)\,dx}{X} \qquad\qquad 1$$

wherein X is the full length of the circumferential groove.

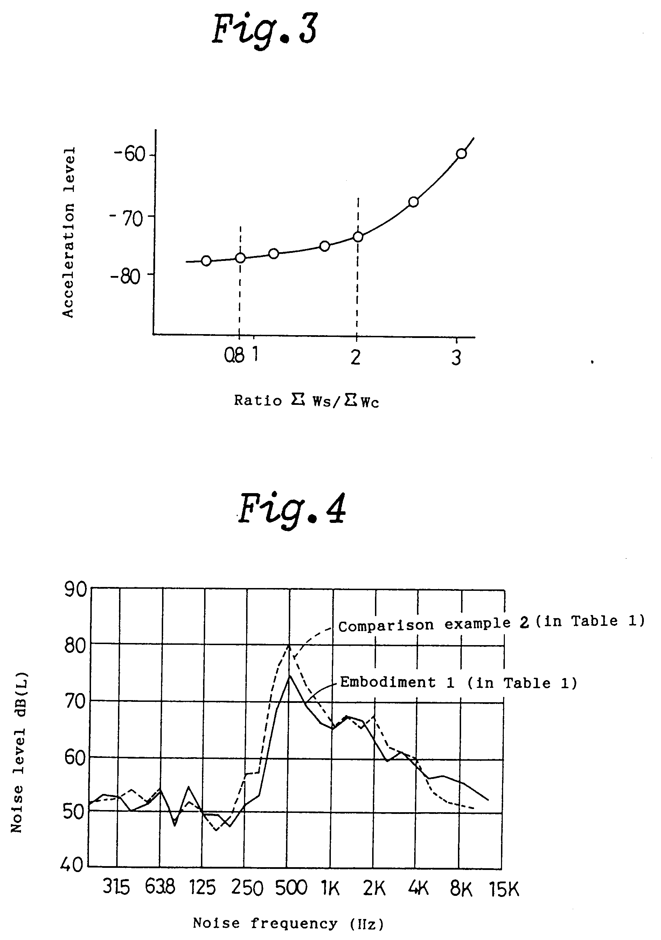

By changing the position and width of the circumferential grooves employed in the central area of the tread, and measuring the acceleration of the tread for the purpose of reducing the oscillation transmissibility. As a result, it is confirmed, as shown in Fig. 3, that the acceleration level was lowered when the ratio $\Sigma Ws/\Sigma Wc$ of the total groove width is 2.0 or less, and the noise at about 500 Hz was then reduced. Here, oscillation transmissibility means the ratio of an excitation acceleration excited on the central area by an exciter and an oscillational acceleration measured at the opposite position of the central area to the position excited by the exciter.

If the volume of the circumferential grooves is reduced in the side areas, so that the ratio $\Sigma Ws/\Sigma Wc$ of the total groove width is less than 0.8, the pattern rigidity is unbalanced, and steering stability is reduced.

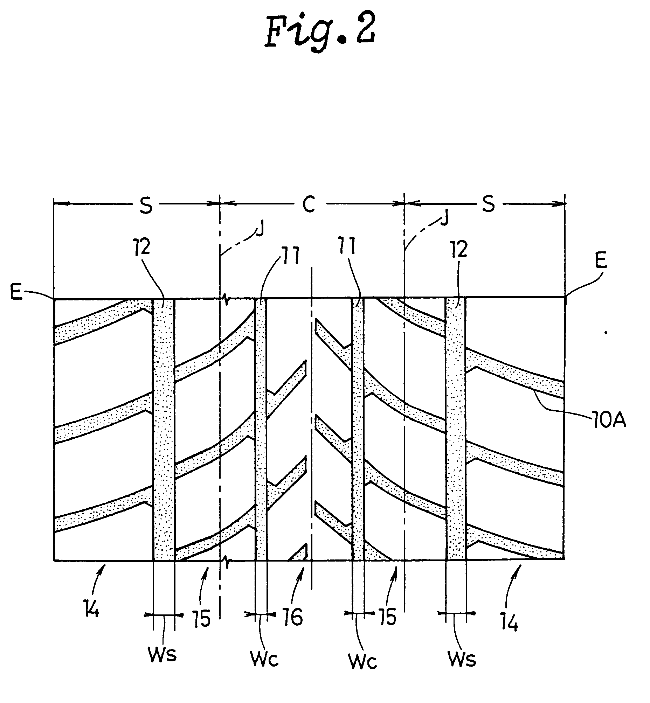

In the tread surface 2A, a central area C is provided with two central circumferential grooves 11, 11 positioned symmetrically to the tyre's equator CO, and two side areas S, S in either sides thereof are provided with side circumferential grooves 12, 12, one for each area, symmetrical to the tyre's equator CO, as shown in Fig. 2.

Thus, the tread rubber 9 is divided into a pair of outer rib portions 14, 14 between the radial line Y1 and the radial line Y2, a pair of inner rib portions 15, 15 between the radial line Y2 and the radial line Y3, and a central rib portion 16 between the radial lines Y3, Y3.

The groove widths Ws, Wc of the circumferential grooves 11, 12 are set such that the ratio $\Sigma Ws/\Sigma Wc$, in this case the ratio Ws/ 2Wc is in the range of 0.8 to 2.0.

Moreover, in the embodiment, the ratio Mc/Ma between the mass Mc of rubber of the central rib portion 16 and the mass Ma of rubber of the outer rib portion 14 is set in the range of 0.8 to 1.5, and the ratio Mb/Ma between the mass Mb of rubber of the inner rib portion 15 and the mass Ma is 1.0 to 1.5. Steering stability is reduced, if the ratio of mass Mc/Ma is less than 0.8 or the ratio Mb/Ma is less than 1.0, while noise at about 1000 Hz is increased, if the ratio Mc/Ma exceeds 1.5 or the ratio Mb/Ma exceeds 1.5.

Furthermore, in the embodiment, when the distance La from an outer edge Fe of the overlapping part of the belt plies to the centre of gravity Ga of the outer rib portion 14 in its sectional area and a distance Lb from the outer edge Fe to the centre of gravity Gb of the inner rib portion 15 in its sectional area and a distance Lc from the outer edge Fe to the centre of gravity Gc of the central rib portion 16 in its sectional area are calculated, the tread rubber 9 is controlled such that the ratio L0a/L0c between the average L0a of the distance La to the average L0c of a distance Lc is 0.35 to 0.45, and the ratio L0b/L0c between the average L0b of the distance Lb to the average L0c of the distance Lc is 0.55 to 0.75.

Here, the centres of gravity Ga,Gb,Gc vary by a pattern of lateral grooves 10A according as the sectional shapes of the rib portion which vary at each point in the circumferential direction. Therefore, the averages L0a, L0b and L0c of the distances La, Lb and Lc over all the rib length are given by the following numerical expressions;

$$LOa = \frac{\int_0^x La(x)\,dx}{X} \tag{2}$$

$$LOb = \frac{\int_0^x Lb(x)\,dx}{X} \tag{3}$$

$$LOc = \frac{\int_0^x Lc(x)\,dx}{X} \tag{4}$$

where X is the full length of the rib portion.

The steering stability is reduced, if the distance ratio L0a/L0c is less than 0.35, and the noise at about 1000 Hz is increased, if the ratio L0a/L0c is more than 0.45 or the ratio L0b/L0c is less than 0.55, while noise at about 500 Hz is increased, if the ratio Lb/Lc exceeds 0.75.

Incidentally, in the embodiment, as long as the ratio $\Sigma Ws/\Sigma Wc$ of the total groove width is within the range of 0.8 to 2.0, a plurality of central circumferential grooves 11 and side circumferential grooves 12 may be provided in the central and side areas C and S, respectively.

Prototypes of tyres (embodiments 1 to 3) size 225/50 R16 and having the structure as shown in Fig. 1 were produced with the specifications shown in Tables 1, 2, and tested for performance. Also, tyres with a conventional structure (comparison example 1) and a structure different from that of the invention were also tested.

The tests were conducted to the following conditions.

1) Tyre weight
The net weight of each tyre was measured, and shown as an index, setting that of the comparison example 1 at 1000. A lower score shows that the tyre is lighter.

2) Measurement of noise in 500 Hz and 1000 Hz bands.

A test was conducted according to the tyre noise test method specified by JASO C606. In the test, the sample tyres were inflated to an internal pressure of 2.0 kg/cm$^2$, loaded at 350 kg, and driven at a speed of 60 Km/h, and the result was analysed for a 1/3 octave band.

As can be seen the tyres of the invention were lighter and produced less noise in the critical band.

**TABLE 1**

| | Embodiment 1 | Embodiment 2 | Comparison example 1 | Comparison example 2 |
|---|---|---|---|---|
| Aspect ratio (%) | 50 | 50 | 50 | 50 |
| Carcass<br>Number of carcass plies<br>Material of carcass cord | 2<br>Polyester | 2<br>Polyester | 2<br>Polyester | 2<br>Polyester |
| Belt layer<br>Structure<br><br>Structure of aromatic polyamide fiber cord<br>Structure of steel fiber cord | Two aromatic poly-<br>amide cords plies<br><br>1500d/2<br>— | An aromatic poly-<br>amide cords ply<br>+ A steel cords ply<br>1500d/2<br>1×5 /0.25 | Two steel cord plies<br><br><br>—<br>1×5 /0.25 | Two aromatic poly-<br>amide cords plies<br><br>1500d/2<br>— |
| Structure of circumferential groove<br>Number of central circumferential grooves<br>Number of side circumferential grooves<br>Sum total ΣWc<br>Sum total ΣWs<br>Ratio ΣWs/ΣWc | Fig. 2<br>2<br>2<br>24<br>20<br>0.82 | Fig. 2<br>2<br>1<br>24<br>20<br>0.82 | Fig. 6<br>2<br>2<br>8<br>24<br>3 | Fig.6<br>2<br>2<br>8<br>24<br>3 |
| Structure of tread rubber (See Table 2.) | type A | type A | type B | type B |
| Tire weight (index) | 94 | 97 | 100 | 94 |
| Noises in 500 Hz band dB(A) | 75 | 74 | 74 | 77 |
| Noises in 1000 Hz band dB(A) | 66 | 65 | 67 | 70 |
| Noises in full frequency band dB(A) | 78 | 77 | 77 | 80 |

TABLE 2

| Structure of tread rubber | | Type A | Type B |
|---|---|---|---|
| Mass of rubber | Ma | 14.5 | 15.4 |
| | Mb | 19.7 | 12.3 |
| | Mc | 18.4 | 30 |
| Distance | | | |
| | Loa (mm) | 20 | 20 |
| | Lob (mm) | 63 | 52 |
| | Loc (mm) | 102 | 102 |
| Ratio | Mb/Ma | 1.36 | 0.80 |
| | Mc/Ma | 1.27 | 1.95 |
| Ratio | Loa/Loc | 0.196 | 0.196 |
| | Lob/Loc | 0.62 | 0.51 |

**Claims**

1.  A tyre for passenger cars comprising a radial carcass (6) extending from a tread (2) through side-walls (3) and folded at each edge around a bead core (5) of a bead (4), and a belt layer (7) disposed radially outside said carcass (6), and said tread (2) having a plurality of circumferential grooves (10) extending on a tread surface (2A) in the circumferential direction of tyre, wherein when the ground-contact surface of the tread surface (24) is virtually divided into three aliquots in the tyre axial direction so as to form a central area C and side areas S, S one on either side thereof, a ratio $\Sigma Ws/\Sigma Wc$ between a sum total $\Sigma Ws$ of the width Ws in the tyre axial direction of the circumferential grooves (10) provided in the side area S and a sum total $\Sigma Wc$ of the width Wc in the tyre axial direction of the circumferential grooves (10) provided in the centre area C is set at 0.8 to 2.0, the central area (C) being provided with two central circumferential grooves (11) disposed symmetrically to the tyre's equator (CO), each of the side areas (S) being provided with a side circumferential groove (12) disposed symmetrically to the tyre's equator (CO), the tread rubber defined between the tread surface (2A) and the belt layer (7) is virtually divided to a pair of outer rib portions between a radial line Y1 from an edge of the ground-contact surface (2A) and a radial line Y2 from a centre of groove bottom of the side circumferential groove (12), a pair of inner rib portions between the radial line Y2 and a radial line Y3 from a centre of groove bottom of the central circumferential groove, and a central rib portion between the radial lines Y3, the ratio Mb/Ma between the mass Mb of rubber of the inner rib portion and the mass Ma being set at 1.0 to 1.5, characterised in that the tyre is a radial tyre having an aspect ratio of 0.4 to 0.6, said belt layer (7) having two belt plies (7a,7b) overlapping each other and one of said belt plies (7a) comprising belt cords of aromatic polyamide fibres, another belt ply (7b) comprising belt cords of aromatic polyamide fibres or steel fibres, and the ratio Mc/Ma between the mass Mc of rubber of the central rib portion and the mass Ma of rubber of the outer rib portion is set at 0.8 to 1.5.

2.  The radial tyre for passenger cars according to claim 1, characterized in that the ratio L0a/L0c between the average L0a of a distance La from an outer end of a overlapping part of the two belt plies (7a,7b) to a centre of gravity Ga of the outer rib portion in its sectional area and the average L0c of a distance Lc from the outer edge of the overlapping part to a centre of gravity Gc of the central rib portion in its sectional area is set at 0.35 to 0.45, and the ratio L0b/L0c between an average L0b of a distance Lb from the outer end of the overlapping part to a centre of gravity Gb of the inner rib portion in its sectional area and the average L0c is set at 0.55 to 0.75.

**Patentansprüche**

1.  Reifen für Personenwagen, umfassend eine radiale Karkasse (6), die sich von einem Laufstreifen (2) durch Seitenwände (3) erstreckt und an jedem Rand um einen Wulstkern (5) eines Wulstes (4) herumgefaltet ist, und eine Gürtelschicht (7), die radial außerhalb der Karkasse (6) angeordnet ist, wobei der Laufstreifen (2) mehrere Umfangsrillen (10) aufweist, die sich auf einer Laufstreifenfläche (2A) in der Umfangsrichtung des Reifens erstrek-

ken, wobei, wenn die Aufstandsfläche der Laufstreifenfläche (24) im wesentlichen in drei Aliquoten in der Axialrichtung des Reifens unterteilt ist, so daß ein zentraler Bereich C und seitliche Bereiche S, S, jeweils einer auf jeder Seite von diesem, gebildet sind, ein Verhältnis ΣWs/ΣWc zwischen einer Gesamtsumme ΣWs der Breite Ws in der Axialrichtung des Reifens der Umfangsrillen (10), die in dem seitlichen Bereich S vorgesehen sind, und einer Gesamtsumme ΣWc der Breite Wc in der Axialrichtung des Reifens der Umfangsrillen (10), die in dem mittleren Bereich C vorgesehen sind, auf 0,8 bis 2,0 festgelegt ist, der zentrale Bereich (C) mit zwei zentralen Umfangsrillen (11) versehen ist, die symmetrisch zum Reifenäquator (CO) angeordnet sind, wobei jeder der seitlichen Bereiche (S) mit einer seitlichen Umfangsrille (12) versehen ist, die symmetrisch zum Reifenäquator (CO) angeordnet ist, und der Laufstreifengummi, der zwischen der Laufstreifenfläche (2A) und der Gürtelschicht (7) festgelegt ist, im wesentlichen in zwei äußere Rippenabschnitte zwischen einer radialen Linie Y1 von einem Rand der Aufstandsfläche (2A) und einer radialen Linie Y2 von einer Mitte eines Rillengrundes der seitlichen Umfangsrille (12), zwei innere Rippenabschnitte zwischen der radialen Linie Y2 und einer radialen Linie Y3 von einer Mitte eines Rillengrundes der zentralen Umfangsrille, und einen zentralen Rippenabschnitt zwischen den radialen Linien Y3 unterteilt ist, und das Verhältnis Mb/Ma zwischen der Gummimasse Mb des inneren Rippenabschnitts und der Masse Ma auf 1,0 bis 1,5 festgelegt ist,
dadurch **gekennzeichnet,** daß der Reifen ein Radialreifen mit einem Aspektverhältnis von 0,4 bis 0,6 ist, wobei die Gürtelschicht (7) zwei Gürtellagen (7a, 7b) aufweist, die einander überlappen, und eine der Gürtellagen (7a) Gürtelcorde aus Fasern aus aromatischem Polyamid umfaßt, eine weitere Gürtellage (7b) Gürtelcorde aus Fasern aus aromatischem Polyamid oder Stahlfasern umfaßt, und daß das Verhältnis Mc/Ma zwischen der Gummimasse Mc des zentralen Rippenabschnitts und der Gummimasse Ma des äußeren Rippenabschnitts auf 0,8 bis 1,5 festgelegt ist.

2. Radialreifen für Personenwagen nach Anspruch 1,
dadurch **gekennzeichnet,** daß das Verhältnis L0a/L0c zwischen dem Durchschnitt L0a eines Abstandes La von einem äußeren Ende eines überlappenden Teils der beiden Gürtellagen (7a, 7b) zu einem Schwerpunkt Ga des äußeren Rippenabschnitts in seiner Querschnittsfläche und dem Durchschnitt L0c eines Abstandes Lc von dem äußeren Rand des überlappenden Teils zu einem Schwerpunkt Gc des zentralen Rippenabschnitts in seiner Querschnittsfläche auf 0,35 bis 0,45 festgelegt ist, und daß das Verhältnis L0b/L0c zwischen einem Durchschnitt L0b eines Abstandes Lb von dem äußeren Ende des überlappenden Teils zu einem Schwerpunkt Gb des inneren Rippenabschnitts in seiner Querschnittsfläche und dem Durchschnitt L0c auf 0,55 bis 0,75 festgelegt ist.

**Revendications**

1. Pneumatique à carcasse radiale pour voiture automobile, comprenant une carcasse radiale (6) partant d'une bande de roulement (2) dans des flancs (3) et repliée à chaque bord autour d'une tringle (5) d'un talon (4), et une couche (7) de ceinture placée radialement à l'extérieur de la carcasse (6), la bande de roulement (2) ayant plusieurs gorges circonférentielles (10) pénétrant sur une surface (2A) de bande de roulement dans la direction circonférentielle du pneumatique, dans lequel, lorsque la surface de contact avec le sol de la surface (2A) de la bande de roulement est virtuellement divisée en trois régions équivalentes dans la direction de l'axe du pneumatique pour la formation d'une zone centrale C et deux zones latérales S, S de part et d'autre de la zone centrale, le rapport ΣWs/ΣWc de la somme totale ΣWs de la largeur Ws dans la direction axiale du pneumatique des gorges circonférentielles (10) placées dans la zone latérale S et de la somme totale ΣWc de la largeur Wc dans la direction axiale du pneumatique des gorges circonférentielles (10) placées dans la zone centrale C est réglé entre 0,8 et 2,0, la région centrale (C) possède une gorge circonférentielle centrale (11) disposée sur l'équateur (CO) du pneumatique, chacune des régions latérales (S) ayant une gorge circonférentielle latérale (12) placée symétriquement par rapport à l'équateur du pneumatique (CO), le caoutchouc de la bande de roulement compris entre la surface (2A) de la bande de roulement et la couche (7) de ceinture est divisé virtuellement en deux parties de côté externe entre une droite radiale Y1 partant d'un bord de la surface de contact avec le sol (2A) et une ligne radiale Y2 partant du centre du fond de la gorge circonférentielle latérale (12), et deux parties de côté interne entre la droite radiale Y2 et une droite radiale Y3 partant du centre du fond de la gorge circonférentielle centrale, et une partie centrale de côté placée entre les droites radiales Y3, le rapport Mb/Ma de la masse Mb de caoutchouc de la partie de côté interne et de la masse Ma étant réglé entre 1,0 et 1,5, caractérisé en ce que le pneumatique est un pneumatique du type à carcasse radiale ayant un rapport d'allongement compris entre 0,4 et 0,6, la couche (7) de ceinture ayant deux nappes (7a, 7b) de ceinture qui se recouvrent et l'une des nappes (7a) de ceinture comprenant des câblés de fibres de polyamide aromatique, une autre nappe (7b) de ceinture ayant des câblés de fibres d'acier ou de polyamide aromatique, et le rapport Mc/Ma de la masse Mc de caoutchouc de la partie centrale de côté et de la masse Ma de caoutchouc de la partie de côté externe est réglé entre 0,8 et 1,5.

2. Pneumatique à carcasse radiale pour voiture automobile selon la revendication 1, caractérisé en ce que le rapport L0a/L0b de la moyenne L0a de la distance La comprise entre un bord externe d'une partie de recouvrement des deux nappes de ceinture (7a, 7b) et le centre de gravité Ga de la partie de côte externe en coupe et de la moyenne L0c de la distance Lc comprise entre le bord externe de la partie de recouvrement et le centre de gravité Gc de la partie centrale de côte en coupe est compris entre 0,35 et 0,4, et le rapport L0b/L0c de la moyenne L0b de la distance Lb comprise entre l'extrémité externe d'une partie de recouvrement et le centre de gravité Gb de la partie de côte interne en coupe et de la moyenne L0c est réglé entre 0,55 et 0,75.

## Fig.1

# Fig.2

## Fig. 3

## Fig. 4

# Fig.5

Tire with two aromatic polyamide cords plies

Tire with two steel cord plies

Noise level dB(L)

90 80 70 60 50 40

31.5 63.8 125 250 500 1K 2K 4K 8K 15K

Noise frequency (Hz)

# Fig.6

W T

S — C — S

E

E

CO

13

# Fig.7

# Fig.8

Fig. 9

EP 0 705 720 B1

16